(19) **Europäisches Patentamt / European Patent Office / Office européen des brevets**

(11) **EP 1 038 433 B1**

(12) **FASCICULE DE BREVET EUROPEEN**

(45) Date de publication et mention
de la délivrance du brevet:
**04.06.2008 Bulletin 2008/23**

(51) Int Cl.:
***A01G 31/00*** *(2006.01)*

(21) Numéro de dépôt: **00400741.5**

(22) Date de dépôt: **16.03.2000**

(54) **Substrat de culture hors-sol**

Substrat für erdlose Kultur

Substrate for soilless cultivation

(84) Etats contractants désignés:
**AT BE CH CY DE DK ES FI FR GB GR IE IT LI LU MC NL PT SE**

(30) Priorité: **19.03.1999 FR 9903421**

(43) Date de publication de la demande:
**27.09.2000 Bulletin 2000/39**

(73) Titulaire: **Saint-Gobain Cultilene B.V.**
**2665 JZ Bleiswijk (NL)**

(72) Inventeurs:
• **Espiard, Philippe**
**60270 Gouvieux (FR)**
• **Marchal, Arnaud**
**60500 Chantilly (FR)**
• **Marle, Gérard**
**60140 Liancourt (FR)**

(74) Mandataire: **Cardin, Elise et al**
**Saint-Gobain Recherche**
**39, quai Lucien Lefranc**
**93300 Aubervilliers Cedex (FR)**

(56) Documents cités:
EP-A- 0 201 426          EP-A- 0 249 261
EP-A- 0 277 397          EP-A- 0 485 277
EP-A- 0 583 086          WO-A- 95/08259
WO-A- 97/07664

## Description

La présente invention se rapporte au domaine des cultures végétales hydroponiques ou cultures hors-sol. Elle est relative en particulier à un substrat à base de laine minérale destiné à ce type de culture.

Dans les cultures hors-sol, les plants sont entretenus et croissent sur des substrats naturels ou artificiels, disposés sur un bac ou autre support adapté, maintenus dans des conditions notamment de lumière et de chaleur déterminées, et les éléments nécessaires sont apportés par une solution nutritive distribuée au rythme voulu.

Les substrats de culture hors-sol à base de laine minérale sont traditionnellement constitués d'un matériau fibreux apte à retenir l'humidité de la solution nutritive qui alimente le plant, tout en conservant une tenue mécanique suffisante lorsqu'il est imbibé de solution nutritive.

Parmi ces matériaux fibreux, on peut utiliser de la laine minérale, telle que laine de verre ou de roche, sur laquelle a été appliqué un encollage ou liant, qui est tout d'abord mise sous forme d'un feutre ou matelas qui est ensuite transformé en l'article du volume désiré.

Un substrat peut se présenter habituellement sous forme de matelas ou tapis relativement longs, de nappes, de plaques, de pains sensiblement parallélépipédiques, de cubes, de godets... A titre d'illustration de formes particulières de réalisation de substrats de culture hors-sol, on peut citer les documents EP-A-201 426, EP-A-249 261, EP-A-310 501, EP-A-388 287, EP-A-389 355, EP-A-407 264, EP-A-485 277, WO-A-95/04453.

L'obtention de la laine se fait usuellement selon les techniques de fabrication de fibres discontinues, du type utilisé pour les fibres dites d'isolation, en particulier par la technique d'éjection centrifuge où la matière minérale en fusion est déversée dans un dispositif comprenant une ou des pièces en rotation sur la périphérie desquelles est amenée la matière en fusion qui en est éjectée sous forme de filaments sous l'effet de la force centrifuge.

La laine minérale est ensuite pourvue d'un liant, généralement à partir d'une composition pulvérisable, et les filaments encollés sont réceptionnés sous forme plus ou moins enchevêtrée, puis un traitement de durcissement du liant permet de donner à la masse de filaments une certaine résistance mécanique.

Dans les publications indiquées ci-dessus, on décrit une structure avantageuse de substrat, dans laquelle les fibres sont orientées de manière sensiblement aléatoire. Pour cela, au cours de la fabrication du substrat, partant d'un feutre constitué immédiatement après la fabrication des fibres, et dans lequel les fibres sont préférentiellement orientées selon des strates, une réorientation plus « aléatoire » est obtenue par une compression longitudinale du feutre. Le produit résultant qui est dit « crêpé » présente des fibres sans direction préférentielle, dans au moins une patrie de l'épaisseur du substrat.

Les liants utilisés pour la fabrication des substrats doivent lui conférer la résistance mécanique nécessaire à une utilisation prolongée du produit à l'état imbibé. On utilise habituellement pour formuler les liants des résines phénoliques, notamment phénol-formaldéhyde ou résines bakélisées.

Chose tout aussi importante, le liant se doit d'être non toxique pour les plants et en particulier ne doit pas contenir ni être susceptible de dégager dans le milieu nutritif des substances indésirées. On a coutume à cet effet de modifier les résines phénol-formaldéhyde avec de l'urée qui réagit avec le formaldéhyde libre du liant, pour limiter la teneur en formaldéhyde libre du substrat. On parvient généralement à limiter le formaldéhyde libéré à moins de 1 mg/l en lixiviation.

L'aptitude au mouillage à la première mise en eau du substrat est en général ajustée par l'incorporation d'agents mouillants tensioactifs dans la fabrication du substrat, car les matières organiques des liants sont généralement hydrophobes.

La présence de ces substances synthétiques dans le substrat peut toutefois être une source d'inquiétude pour l'utilisateur qui craint que, au fur et à mesure de la culture, la circulation d'eau puisse extraire progressivement par un effet de lessivage des substances contenues dans la composition du liant et les introduire dans les plantes.

Dans le cas des agents mouillants, on peut également craindre une perte progressive des tensioactifs par lessivage, avec une perte correspondante du pouvoir de mouillage du substrat, qui peut être dommageable en cas d'assèchement accidentel si les conditions d'irrigation sont mal maîtrisées, le remouillage étant alors difficile.

Un autre problème peut se poser dans le cas particulier où le traitement de durcissement ne réussit pas totalement, et le produit renferme une portion de résine non réticulée qui peut être riche en monomères ou substances organiques potentiellement inacceptables par la culture. Ce problème est connu par les fabricants comme la formation de « tache humide ». Il se traduit par une mise au rebut du produit et une perte économique pour le fabricant.

Le but de la présente invention est de pallier cet inconvénient en proposant un substrat de culture qui soit moins susceptible de libérer des substances indésirées dans les plantes.

A cet égard, l'invention a pour objet un substrat de culture à base d'un feutre de laine minérale renfermant un liant organique, caractérisé en ce que le liant est à base d'une résine polyester, en particulier acrylique ou méthacrylique.

Dans la présente demande, le terme polyester désigne le produit de réaction d'au moins un composé polyol avec au moins un composé polyacide carboxylique, chaque composé ayant une fonctionnalité d'au moins 2, l'un et/ou l'autre composé pouvant lui-même être de type polymère.

Avantageusement, le polyester est terminé par des fonctions carboxyles, par suite d'une réaction en présence d'un excès de fonctions acide carboxylique.

Le liant peut éventuellement renfermer un produit polyester sous forme salifiée ou partiellement salifiée.

Le choix d'un liant polyester assure que le produit est exempt de formaldéhyde, dont la phytotoxicité est connue des utilisateurs.

Il est inoffensif y compris à l'état non réticulé, ce qui résout le problème de la tache humide.

Avantageusement, le polyester se présente sous la forme d'une résine diluable, obtenue par réaction en phase aqueuse en solution ou en émulsion.

La résine est de type thermodurcissable, pouvant contenir un catalyseur de durcissement, notamment un acide contenant du phosphore et/ou un sel dérivé, notamment sel de métal alcalin tel que sodium ou potassium.

De préférence, le polyester est de type acrylique ou méthacrylique, découlant de la réaction d'un polyol, notamment diol ou triol, avec un composé polyacide acrylique ou méthacrylique éventuellement substitué, éventuellement avec au moins un autre comonomère, notamment de type oléfinique.

La part d'acide peut représenter de 10 à 90% en mole, notamment 50 à 70% en mole du polymère, et la part d'alcool peut représenter de 90 à 10% en mole, notamment de 50 à 30% en mole du polymère.

Avantageusement, le polyester peut être obtenu à partir d'un composé monomère à fonction carboxyle tel que notamment acide acrylique, méthacrylique, crotonique, isocrotonique, maléique, cinnamique, itaconique, éventuellement substitués, et leurs mélanges, et d'un composé monomère acrylate et/ou méthacrylate d'hydroxyalkyle notamment en $C_2$-$C_8$, tel que en particulier (méth)acrylate d'hydroxyéthyle, d'hydroxypropyle, d'hydroxybutyle, et leurs mélanges.

Un comonomère de type oléfinique peut avantageusement être choisi parmi l'éthylène, le butadiène, des composés vinyliques tels que le styrène, (méth)acrylonitrile, (méth)acrylate d'alkyle notamment en $C_1$-$C_6$, acrylate de vinyle, acétate de vinyle...

Des résines polyester utilisables selon l'invention sont décrites notamment dans EP-A-583 086, US-A-5 763 527, US-A-5 385 756, US-A-5 081 178, US-A-4 912 147, incorporés ici par référence.

Les résines de EP-A-583 086 sont des compositions aqueuses durcissables comprenant :

(a) un polyacide comprenant au moins deux groupes acide carboxylique, anhydride, ou sels en dérivant, ce polyacide étant de préférence un polymère, notamment un polymère d'addition dérivé d'un acide carboxylique à insaturation éthylénique, par exemple dérivé de monomère ester acrylique, tels que acrylate de méthyle, éthyle, butyle, 2-éthylhexyle, décyle, hydroxyéthyle ; de méthacrylate de méthyle, butyle, isodécyle, hydroxyéthyle ; d'acrylamides ; de styrène, de butadiène ; d'acétate de vinyle ; d'acrylonitrile ou méthacrylonitrile, et autres ;
(b) un polyol comprenant au moins deux groupes hydroxyles, notamment une hydroxylamine ; et éventuellement
(c) un accélérateur de durcissement contenant du phosphore tel qu'un acide hypophosphoreux et ses sels selon US-A-5 077 361;

dans laquelle le rapport du nombre d'équivalents de groupes acide, anhydride, ou leurs sels au nombre d'équivalents hydroxyle est de l'ordre de 1/0,01 à 1/3, de préférence de 1/0,2 à 1/1,

et lesdits groupes acide carboxylique, anhydride, ou leurs sels sont neutralisés dans une mesure d'environ 35% avec une base liée ou permanente, c'est-à-dire une base non volatile telle que soude, potasse, carbonate de sodium, hydroxyde d'alkylammonium.

Cette composition est durcissable par traitement thermique à une température de l'ordre de 120 à 400°C.

Les résines selon le document US-A-5 385 756 sont similaires.

Les résines décrites dans le document US-A-5 081 178 sont des dispersions aqueuses comprenant :

a) une dispersion aqueuse d'un polymère A ayant une température de transition vitreuse de -50 à +60°C et issu d'un monomère à monoinsaturation éthylénique ne portant pas d'autre groupe polymérisable ou condensable que les groupes carboxyle et dérivés choisi de préférence parmi le butadiène, l'éthylène, mono- et diacides carboxyliques $\alpha,\beta$-monoinsaturés à 3 à 5 atomes de carbone et leurs amides non substitués (en particulier acides acrylique, méthacrylique, maléique et itaconique, et leurs mono- et diamides), esters de monoacides carboxyliques $\alpha,\beta$-monoinsaturés à 2 à 5 atomes de carbone dérivés d'alcools à 1 à 8 atomes de carbone (en particulier esters d'acide acrylique ou méthacrylique) esters vinyliques d'acides monocarboxyliques ayant jusqu'à 6 atomes de carbone, acrylonitrile, méthacrylonitrile, monomères vinylaromatiques (styrène, vinyltoluènes, chlorostyrènes ou tert-butylstyrènes), halogénures de vinyle (chlorure de vinyle, chlorure de vinylidène) ;
b) une solution aqueuse d'un polymère B composé d'un ou plusieurs composés N-hydroxycarboxyméthylamide d'acide acrylique et/ou méthacrylique et les sels hydrosolubles de ces amides (notamment sels d'ammonium ou de métal alcalin, par exemple sodium, potassium) ;

le polymère B représentant 0,5 à 10% en poids de solides du total du polymère A et polymère B.

US-A-4 912 147 décrit des résines formées de dispersions aqueuses de copolymère de (méth)acrylate obtenu en polymérisation en émulsion, dans lesquelles 0,5 à 10% en poids par rapport à la quantité totale de monomères sont de l'acide (méth)acrylamidoglycollique et/ou son ester méthylique et/ou son éther méthylique. De préférence, le procédé utilise :

(a) de 85 à 99,5% en poids de monomère ester carboxylique à insaturation α,β-monooléfinique en $C_3$-$C_{12}$, de préférence acrylates et/ou méthacrylates d'alcools à 1 à 8 atomes de carbone ;
(b) de 0,5 à 10% d'acide (méth)acrylamidoglycollique et/ou son ester méthylique et/ou son éther méthylique et ;
(c) de 0 à 5% d'acide carboxylique à insaturation α,β-monooléfinique en $C_3$-$C_5$ et/ou leurs amides.

Le substrat de culture selon l'invention renferme avantageusement de l'ordre de 2 à 10%, notamment de l'ordre de 2 à 5% en poids de résine polyester (matière sèche) par rapport au poids de laine minérale.

Le caractère hydrophile du polyester est particulièrement avantageux pour la réalisation d'un substrat de culture, car il rend l'usage d'agent mouillant facultatif. En particulier, après un arrêt accidentel ou volontaire de l'irrigation, le substrat sec se remouille spontanément sans difficulté.

Si l'on souhaite néanmoins maintenir des additifs mouillants dans le produit, leur proportion peut être notablement réduite. Par exemple, alors qu'on utilise usuellement une teneur en agent mouillant de 100 à 200 g/m³, elle peut être réduite à moins de 100 g/m³, notamment moins de 80 g/m³, lorsqu'on emploie une résine polyester selon l'invention.

Les autres additifs usuels d'un encollage peuvent aussi être incorporés dans un produit selon l'invention, en particulier un promoteur d'adhérence de type silane, notamment aminosilane.

Le substrat de culture selon l'invention a avantageusement une structure crêpée, telle que décrite notamment dans EP-A-310 501, EP-A-388 287 ou WO-WO-A-95/04453.

Il peut s'agir notamment de panneaux, nappes, pains, cubes, etc.

Sa densité peut être variable en fonction du type de laine minérale et de la forme du substrat. Elle est avantageusement inférieure à 90 kg/m³, en particulier 80 kg/m³ ou moins, notamment de l'ordre de 20 à 80 kg/m³, par exemple de 40 à 60 kg/ m³. On peut réaliser des feutres légers, de masse volumique plus faible et notamment inférieure à 20 kg/m³ pour des feutres de laine de verre ; on réalise également des feutres légers de laine de roche, qui ont notamment une densité de moins de 40 kg/m³.

D'autres caractéristiques et avantages de l'invention apparaîtront de la description des exemples suivants.

On décrit tout d'abord un exemple comparatif selon l'art antérieur servant de référence de comparaison pour un certain nombre de propriétés.

**Exemple comparatif**

On fabrique un substrat de culture à base de laine de roche obtenue par la technique dite de la centrifugation externe utilisant comme outils de fibrage une cascade de rotors sur la tranche desquels tombe la composition de roche fondue, laquelle s'étire sous forme de filaments avec la rotation des rotors.

Ces filaments sont encollés avec un liant dont la composition est la suivante :

- résine formo-phénolique/urée en prémélange 80/20     total 100 parties en poids
- silane     0,2
- catalyseur de durcissement sulfate d'ammonium     1
- ammoniaque     3
- tensioactif     1,4

Le produit se caractérise par un fasonaire de 200 pour un échantillon de 5g et par une densité de 55-60 kg/m³.

La mesure du fasonaire est destinée à la détermination de l'indice de finesse des fibres non encollées. Cet indice est conventionnel.

On pèse une éprouvette (5 g) constituée par une touffe de laine minérale exempte de liant ou d'additifs organiques mais pouvant comporter des composants non fibreux (slug). Cette éprouvette est comprimée dans un volume donné, et est traversée par un courant de gaz (air sec ou azote) maintenu à débit constant. La mesure de fasonaire est alors la perte de charge à travers l'éprouvette, évaluée par une colonne d'eau graduée en unité conventionnelle. Classiquement, un résultant de fasonaire est la moyenne des perte de charge observées pour dix éprouvettes.

**Exemple 1**

On fabrique un substrat de culture à base de laine de roche obtenue par la même technique dite de la centrifugation externe que dans l'exemple comparatif.

Ces filaments sont encollés avec un liant dont la composition est la suivante :

- résine polyester acrylique HF 05 commercialisée par Rohm&Haas extrait sec : 50%      100 parties en poids
- silane      0,5
- tensioactif      1,4

Le produit se caractérise par un fasonaire de 240 pour un échantillon de 5 g et par une densité de 60 kg/m$^3$. Le produit présente des caractéristiques mécaniques satisfaisantes pour l'utilisation en culture.

On soumet le produit à un certain nombre de tests représentatifs des propriétés influençant l'efficacité en culture, dont les résultats figurent au tableau 1 ci-après.

### 1. Mouillabilité

Ce test permet de connaître la capacité d'un substrat à se mouiller à sa première mise en eau.

On découpe un échantillon de 200*200*75 mm. On pose cet échantillon dans un bac de dimensions suffisantes pour permettre l'immersion complète de l'échantillon. Ce bac est rempli exclusivement d'eau de ville propre à une température comprise entre 10 et 25°C. On chronomètre le temps mis par l'échantillon pour s'enfoncer sous la surface de l'eau. Cette opération est menée sur 12 échantillons, le résultat étant la moyenne des temps mesurés.

Une mouillabilité satisfaisante se situe en général entre 5 et 40 secondes.

### 2. Remontée capillaire

Ce test sert à qualifier la capacité de diffusion naturelle de l'eau dans un substrat initialement sec.

On découpe des échantillons de 100*100*75 mm. Douze échantillons sont placés sans qu'ils se touchent, dans un bac d'eau de ville propre (température 10 à 25°C), maintenu à un niveau d'eau constant de 5 mm (à partir du fond plan du bac). Au bout de 24 h, les échantillons sont pesés. Les remontées capillaires sont alors calculées suivant la formule :

$$\text{Remontée capillaire} = ((M_2-M_0)/100)-0.5)*1000/\text{porosité})$$

Avec

$M_0$ : masse initiale de l'échantillon, exprimée en gramme

$M_2$ : masse de l'échantillon humide au bout de 24 h, exprimée en gramme

Porosité = 100 (MVA - 25) où MVA est la masse volumique apparente de l'échantillon exprimée en kg/m$^3$.

Le résultat obtenu est la moyenne sur 12 échantillons des remontées capillaires calculées.

### 3. Potentiel de rétention hydrique

Il s'agit de mesurer la capacité de rétention en eau d'un substrat initialement saturé, sous une dépression de 10 cm d'eau.

Le test consiste à mesurer la perte de masse, en continu (dynamique) d'un échantillon initialement saturé (immersion forcée pendant 1 min minimum) en eau (eau de ville propre, température = 10 à 25°C) soumis à une dépression (succion) de 10 cm d'eau. La mesure est stoppée à 10 minutes, temps au bout duquel, dans les conditions du test et avec son dispositif de mesurage, la mesure reflète fidèlement la rétention hydrique obtenue en condition stationnaire (équilibre). La rétention hydrique est alors donnée sous la forme d'un pourcentage volumique d'eau contenue dans l'échantillon. Les échantillons de test sont découpés selon les dimensions 100*100*75 mm. Le résultat obtenu est la moyenne de minimum 5 échantillons.

### 4. Phytotoxicité

Ce test a concerné la phytotoxicité du liant du substrat vis-à-vis de plants telle qu'elle peut se manifester suite à un accident de réticulation lors d'une fabrication.

Pour ce faire, des taches humides ont été simulées par injection au coeur de cubes-test de solution d'encollage non réticulée. On fait ensuite germer du cresson alènois sur ces cubes et l'on note le taux de succès de la germination.

Le but est de tester la phytotoxicité d'additifs ou de substrat sur du cresson alenois (le cresson alenois étant connu pour être particulièrement sensible à différents polluants tels que phénol & formole). Cette sensibilité est traduite de manière quantitative par l'expression sous forme de pourcentage du taux de germination de graine de cresson et de manière qualitative par la forme, l'aspect et l'état des racines et radicelles des plantules.

Des échantillons sont découpés aux dimensions 100*100*50 mm et placés dans des cuvettes correspondant à leurs dimensions (environ 500 ml). On verse alors 500 ml d'eau de ville propre (température 10 à 25°C) sur l'échantillon. L'échantillon est retourné deux fois dans l'eau afin de bien l'humecter et d'homogénéiser la répartition de l'eau et des éventuels polluants. 50 graines de cresson sont alors réparties sur la surface de l'échantillon. Les cuvettes sont placées dans des conditions de température de 25°C et d'humidité relative de 70%. Les observations sont menées à partir du 3ème jour après le semis, les conclusions au 7ème jour (conclusions observations et dénombrement des plantules). Classiquement les tests de phytotoxite sont menés sur 4 à 6 échantillons. Le résultat obtenu est la moyenne des taux de germination observés.

On considère qu'au-dessus de 94% de germination, le produit est non toxique et qu'en dessous de 80% une toxicité est décelée.

Les résultats sont les suivants :

Tableau 1

| TEST | EXEMPLE 1 | EXEMPLE COMPARATIF |
|---|---|---|
| Mouillabilité | +++ | + |
| Remontée capillaire | +++ | + |
| Rétention hydrique | 73% | 69% |
| Phytotoxicité<br>Injection 0 ml<br>Injection 10 ml<br>Injection 20 ml<br>Injection 50 ml | <br>89,7%<br>96,0%<br>93,1%<br>92,3% | <br>90%<br>non déterminé<br>< 80%<br>< 80% |

Dans les deux premiers tests, il semble que des difficultés techniques liées au mauvais fonctionnement d'un appareil aient pu fausser les valeurs absolues des résultats mesurés (les valeurs de l'exemple comparatif étant plus élevées qu'à la normale). Néanmoins, la comparaison des ordres de grandeur des valeurs mesurées a permis une estimation qualitative fiable de l'amélioration apportée par l'invention. C'est pourquoi les résultats rapportés au tableau 1 sont exprimés dans l'échelle suivante :

+++ très satisfaisant
++ satisfaisant
+ assez satisfaisant

A titre indicatif, le caractère très satisfaisant du produit de l'exemple 1 est confirmé par la valeur de mouillabilité mesurée à 26 s.

Ces deux premières lignes montrent le caractère hydrophile intrinsèque du produit l'invention, et l'on peut estimer que l'on obtiendrait des résultats comparables à ceux de l'exemple comparatif si le tensioactif était totalement supprimé dans le produit de l'exemple 1.

Le test de rétention hydrique montre que malgré tout, le produit de l'exemple 1 a une aptitude à la rétention comparable aux produits classiques et ne reste pas gorgé d'eau.

La combinaison des trois propriétés précédentes signifie que, dans des conditions de culture, le pain va être convenablement mouillé pour permettre l'apport de la quantité d'eau et d'éléments nutritifs dont le plant a besoin, sans que le plant ne soit noyé dans l'eau contenue dans le substrat, donc sans risque d'asphyxie du plant.

Dans le test de phytotoxicité, les taux de germination obtenus à chaque essai de l'exemple 1 montrent une très bonne tolérance du liant polyester par les plants et l'observation des plants obtenus confirme l'absence de problème de phytotoxicité : bonne pénétration racinaire, aucune brûlure, présence systématique de radicelles.

Contrairement à cela, dans l'exemple comparatif, un liant classique à base de résine formo-phénolique se révèle toxique pour le plant, au moins à partir d'une quantité injectée de 20 ml.

Pour un fabricant industriel cela implique la mise au rebut systématique des produits présentant des taches humides.

Le liant polyester selon l'invention permet donc d'éviter les mises au rebut en cas de taches humides.

**Revendications**

1. Substrat de culture hors-sol à base d'un feutre de laine minérale, notamment de verre ou de roche, renfermant un liant organique, **caractérisé en ce que** le liant est à base d'une résine polyester, ledit substrat comprenant de 2 à 10% en poids de résine polyester, en poids sec, par rapport au poids de laine minérale.

2. Substrat de culture selon la revendication 1, **caractérisé en ce que** la résine est de type acrylique ou méthacrylique.

3. Substrat selon la revendication 1 ou 2, **caractérisé en ce que** le polyester est terminé par des fonctions carboxyle.

4. Substrat selon la revendication 3, **caractérisé en ce que** le polyester est au moins partiellement salifié.

5. Substrat selon l'une quelconque des revendications précédentes, **caractérisé en ce qu**'il comprend moins de 100 g/m$^3$ en poids d'agent mouillant par rapport au poids de laine minérale.

6. Substrat selon l'une quelconque des revendications précédentes, **caractérisé en ce qu**'il a une densité inférieure à 90 kg/m$^3$, notamment de l'ordre de 20 à 80 kg/m$^3$.

**Claims**

1. Substrate for soilless cultivation based on a felt of mineral wool, in particular of glass wool or rock wool, containing an organic binder, **characterized in that** the binder is based on a polyester resin, said substrate comprising from 2% to 10% by weight of polyester resin, on a dry weight basis, relative to the weight of mineral wool.

2. Substrate for cultivation according to Claim 1, **characterized in that** the resin is of acrylic or methacrylic type.

3. Substrate according to Claim 1 or 2, **characterized in that** the polyester ends with carboxyl functions.

4. Substrate according to Claim 3, **characterized in that** the polyester is at least partially salified.

5. Substrate according to any one of the preceding claims, **characterized in that** it comprises less than 100 g/m$^3$ by weight of wetting agent relative to the weight of mineral wool.

6. Substrate according to any one of the preceding claims, **characterized in that** it has a density of less than 90 kg/m$^3$, especially of the order of 20 to 80 kg/m$^3$ .

**Patentansprüche**

1. Erdeloses Kultursubstrat auf Basis eines Filzes aus Mineralwolle, insbesondere aus Glas oder Stein, enthaltend ein organisches Bindemittel, **dadurch gekennzeichnet, dass** das Bindemittel eines auf Basis eines Polyesterharzes ist und das Substrat 2 bis 10 Gewichtsprozent des Polyeserharzes, als Trockengewicht im Verhältnis zum Gewicht der Mineralwolle, umfasst.

2. Kultursubstrat nach Anspruch 1, **dadurch gekennzeichnet, dass** das Harz Acrylharz oder Methacrylharz ist.

3. Substrat nach Anspruch 1 oder 2, **dadurch gekennzeichnet, dass** das Polyester Carboxylenden aufweist.

4. Substrat nach Anspruch 3, **dadurch gekennzeichnet, dass** das Polymer wenigstens teilweise in Salzform vorliegt.

5. Substrat nach einem der vorhergehenden Ansprüche, **dadurch gekennzeichnet, dass** es weniger als 100g/m$^3$ des Gewichts des Benetzungsmittels im Verhältnis zu dem Gewicht der Mineralwolle enthält.

**6.** Substrat nach einem der vorhergehenden Ansprüche, **dadurch gekennzeichnet, dass** es eine Dichte geringer als 90 kg/m$^3$, insbesondere in einem Bereich von 20 bis 80 kg/m$^3$, aufweist.

## RÉFÉRENCES CITÉES DANS LA DESCRIPTION

**Documents brevets cités dans la description**

- EP 201426 A
- EP 249261 A
- EP 310501 A
- EP 388287 A
- EP 389355 A
- EP 407264 A
- EP 485277 A
- WO 9504453 A
- EP 583086 A
- US 5763527 A
- US 5385756 A
- US 5081178 A
- US 4912147 A
- US 5077361 A